# EUROPÄISCHE PATENTSCHRIFT

(11) **EP 0 508 076 B1**
(45) Veröffentlichungstag und Bekanntmachung des Hinweises auf die Patenterteilung: **15.11.1995**
(21) Anmeldenummer: 92103212.4
(22) Anmeldetag: 26.02.1992
(51) Int. Cl.: G02B 21/26

(54) **Endschaltvorrichtung mit definiertem Überlauf zum Objektschutz bei Mikroskopen mit motorischem Fokussiertrieb**
Limit switch with preset overrun for the protection of the sample in microscopes with motorised focussing
Interrupteur de fin de course avec dépassement prédéterminé pour protéger l'objet dans des microscopes avec mise au point motorisée

(30) Priorität: 12.04.1991 DE 4112010
(43) Veröffentlichungstag der Anmeldung: 14.10.1992
(73) Patentinhaber: LEICA MIKROSKOPIE UND SYSTEME GmbH, D-35530 Wetzlar (DE)
(72) Erfinder: Kaczynski, Ulrich, W-6350 Bad Nauheim (DE); Hedrich, Roland, W-6332 Ehringhausen (DE)

(56) Entgegenhaltungen:
- DE-A- 2 258 105
- DE-C- 939 170
- US-A- 3 721 759
- PATENT ABSTRACTS OF JAPAN vol. 9, no. 246 (P-393) 3. Oktober 1985 & JP-A-60 098 361
- PATENT ABSTRACTS OF JAPAN vol. 9, no. 243 (P-392) 30. September 1985 & JP-A-60 097 265
- PATENT ABSTRACTS OF JAPAN vol. 9, no. 243 (P-392) 30. September 1985 & JP-A-60 097 266

## Beschreibung

Die Erfindung betrifft eine Endschaltvorrichtung zur Bewegungsbegrenzung eines motorischen Fokussierantriebs, insbesondere für ein Mikroskop mit bewegbarem Objekttisch gemäß dem Oberbegriff der Patentansprüche 1 und 2.

Der sichere Objekt/Objektivschutz in der Mikroskopie soll sicherstellen, daß beim Fokussieren das Objekt nicht mit dem gewählten Objektiv in Berührung kommt und somit weder das Objekt noch das Objektiv beschädigt werden können.

Dieses Problem ist bei manuell arbeitenden Fokussierantrieben dadurch gelöst worden, daß mechanische Anschläge am Mikroskoptisch vorgesehen sind, die den Fokussiertrieb in einer bestimmten Stellung blockieren. Ferner sind auch mechanische einstellbare Raststellungen bekannt, über die eine eingestellte Objekttischposition reproduzierbar fixiert werden kann.

Modernere Mikroskopantriebe verfügen über einen motorischen Fokussierantrieb und sind mit elektrisch/elektronischen Steuereinrichtungen ausgestattet, über die die Fokusposition angefahren und gespeichert werden kann. Eine derartige Einrichtung mit einem Autofokussystem mit einer Fernsehkamera und einer bildanalytischen Auswerteeinrichtung ist aus der US 3 721 759 bekannt. Der motorisch angetriebene Objekttisch wird zur Fokussierung so lange in Objektivrichtung verstellt, bis die Auswerteeinrichtung ein entsprechendes Signal liefert. Bei derartigen Einrichtungen ist es jedoch durchaus möglich, daß bei Objekten mit geringem oder keinem Kontrast die Auswerteeinrichtung unbrauchbare oder falsche Signale liefert und damit die Gefahr einer Kollision zwischen Objekt und Objektiv besteht.

Die mit motorischen Fokussierantrieben ausgestatteten Mikroskopsysteme werden zunehmend zu Serieninspektionen z.B in der Halbleiterindustrie eingesetzt. Dabei hat es sich gezeigt, daß unter Umständen elektronische Steuerungen unzuverlässig arbeiten und ein unbedingt erforderlicher Objektschutz mit elektronischen Mitteln nicht sicher gewährleistet werden kann.

Ferner hat die Praxis gezeigt, daß bei Serieninspektionen die zu untersuchenden Objekte mit Fertigungstoleranzen behaftet sind. So können beispielsweise die mit elektronischem oder mechanischem Objektschutz ausgestatteten Mikroskope nicht hinreichend genau fokussiert werden, wenn die Objektdicke variiert. Durch den aktivierten Objektschutz kann der Objekttisch aus der abgespeicherten Fokusposition nicht näher an das Objektiv herangefahren und somit nicht fokussiert werden. Dies hat sich für Serieninspektionen als nachteilig herausgestellt, da z. B. in der Halbleiterindustrie die zu untersuchenden Wafer mit Toleranzen von ca. +- 20 µm behaftet sein können. Zur exakten Fokussierung eines derartigen Objekts muß der aktivierte Objektschutz erst umständlich abgeschaltet und dann neu justiert werden.

Es ist daher Aufgabe der vorliegenden Erfindung, bei einem motorisch bewegten Fokussierantrieb für ein Mikroskop eine Endschaltvorrichtung derart zu verbessern, daß zusätzlich zum Objekt-/Objektivschutz auch ein definiertes Weiterfokussieren über den festgelegten Fokuspunkt hinaus ermöglicht wird.

Diese Aufgabe wird erfindungsgemäß durch den kennzeichnenden Teil der Patentansprüche 1 und 2 gelöst. Vorteilhafte Weiterbildungen der Erfindung sind Gegenstand der Unteransprüche.

Die Erfindung zeichnet sich u. a. auch dadurch aus, daß der Verfahrweg zwischen dem Objekttisch und dem Objektiv durch einen zusätzlichen Kurzschlußschalter begrenzt wird und daher auch bei einem Ausfall der Steuerelektronik keine Kollision des Objektes mit dem Objektiv erfolgen kann. Ferner wird durch den definierten Abstand zwischen dem elektrischen Schalter und dem Betätigungsstift der Überfahrweg für die abgespeicherte Fokusposition eindeutig festgelegt.

Die Erfindung ist in Ausführungsbeispielen dargestellt und wird an Hand der schematischen Zeichnungen näher erläutert. Es zeigen:
- die Fig. 1: eine am Mikroskopstativ angeordnete Endschaltvorrichtung und
- die Fig. 2: ein Ausführungsbeispiel der Endschaltvorrichtung mit einer Gabellichtschranke.

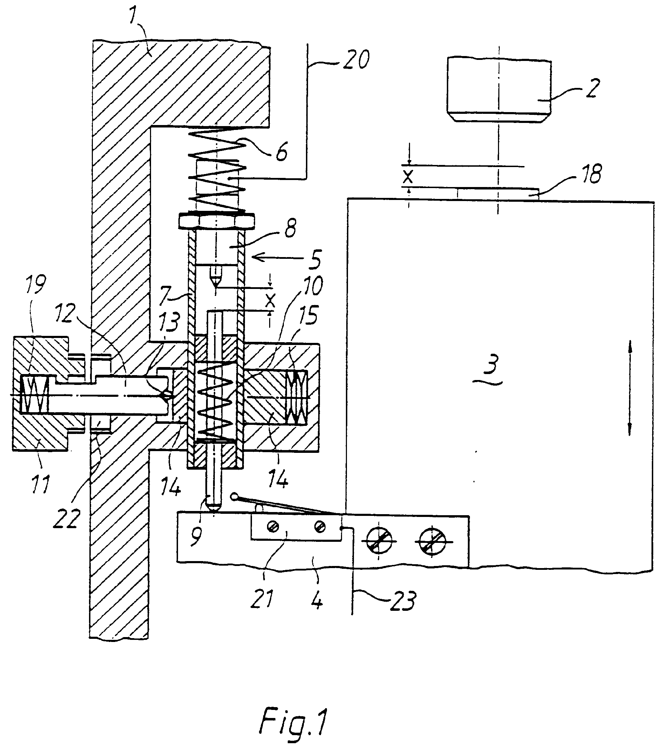

Die Figur 1 zeigt einen Teil eines Mikroskopstativs 1, ein Mikroskopobjektiv 2 und einen in Pfeilrichtung motorisch bewegbaren Objekttisch 3 mit einer daran angeordneten ersten Schaltfahne 4. Diese weist einen Kurzschlußschalter 21 auf, der über eine Kabelverbindung 23 in den Stromkreis des nicht mit dargestellten Fokusmotors integriert ist.

Eine Endschaltvorrichtung 5 ist über eine Feder 6 mit dem Mikroskopstativ 1 verbunden. Die Schaltvorrichtung 5 weist eine Schaltstange 7, einen Betätigungsstift 9, eine Feder 10 und einen elektrischen Schalter 8 auf, welcher über Leitungen 20 mit einem elektrisch angetriebenen Fokusmotor (nicht mit dargestellt) verbunden ist. Der Betätigungsstift 9 ist über eine Druckfeder 10 in die Schaltstange 7 eingespannt und steht in kraftschlüssiger Verbindung mit der ersten Schaltfahne 4. Die Schaltstange 7 der Endschaltvorrichtung 5 ist über eine lösbare Klemmung parallel zur Bewegungsrichting des Objekttisches 3 am Mikroskopstativ 1 befestigt. Die Klemmung erfolgt mit einem drehbeweglichen Rändelknopf 11, einer Spannfeder 19, einem Klemmteil 12, einer Kugel 13, einer Klemmhülse 14 sowie einer Tellerfeder 15.

Der lichte Abstand X zwischen dem Betätigungsstift 9 und dem elektrischen Schalter 8 definiert den Überfahrweg X des Objekttisches 3 aus der abgespeicherten Fokusposition zum Objektiv 2. Dadurch können vorhandene Toleranzen in der Objektdicke ausgeglichen werden.

Die Justage der Schaltstange 7 und die damit verbundene Festlegung der Fokusstellung erfolgt durch eine erste manuell gesteuerte Fokussierung des Mikroskops. Die Abspeicherung der Fokuseinstellung kann beispielsweise dadurch erfolgen, daß der Fokusmotor als Schrittmotor ausgebildet ist und aus einer Grundposition des Objekttisches bis zum Erreichen der Fokusstellung die Einzelschritte gezählt und in einer nachgeordneten Rechner/Speichereinrichtung abgespeichert werden.

Nach dieser ersten Fokussierung des Mikroskops wird der Rändelknopf 11 gelöst. Die Schaltstange 5 wird durch ihr Eigengewicht und durch die Kraft der Feder 6 bewegt. Der Betätigungsstift 9 setzt auf der ersten Schaltfahne 4 kraftschlüssig auf. Durch Eindrücken und Verriegeln des Rändelknopfs 11, in einer am Stativ 1 dafür vorgesehene Ausnehmung 22, wird die Schaltstange 7 in der Klemmhülse 14 festgelegt.

Die Kraft der Feder 10 ist größer dimensioniert als das Eigengewicht der Endschaltvorrichtung 5 zusammen mit der Federkraft 6. Dadurch ergibt sich auch der Schaltweg X zwischen der Schaltstange 9 und dem elektrischen Schalter 8.

Nach einem Objektwechsel und dem damit verbundenen Absenken des Objekttisches 3 kann der Tisch 3 beispielsweise automatisch in die abgespeicherte Fokusposition zurückgestellt werden. Bei einer veränderten Objektdicke ist der Fokus nicht optimal eingestellt und eine manuell oder über eine Autofokuseinrichtung gesteuerte Nachfokussierung erforderlich. Liegt diese neue Fokusposition unterhalb der abgespeicherten Position, d.h. der Abstand zwischen dem Objekt und dem Objektiv 2 ist größer, kann dies durch einfaches Absenken des Tisches 3 erfolgen. Im Gegensatz dazu kann die neue Fokusposition auch oberhalb der abgespeicherten Position liegen, d.h. der Abstand zwischen dem Objekt und dem Objektiv 2 ist kleiner. In diesem Fall muß der Objekttisch 3 weiter in Richtung des Objektivs 2 bewegt werden. Dabei muß sichergestellt werden, daß eine Kollision des Objekts 18 mit dem Objektiv 2 ausgeschlossen wird. Dies wird dadurch gewährleistet, daß der Betätigungsstift 9 kraftschlüssig mit der ersten Schaltfahne 4 verbunden ist und bei einem derartigen Fokussiervorgang der Stift 9 in die Schaltstange 7 eingedrückt wird. Der zulässige Überfahrweg, d.h. der Weg der über die abgespeicherte Fokusposition hinaus in Richtung des Objektiv 2 vom Objekttisch 3 zurückgelegt werden kann, ist durch den Abstand X zwischen dem Betätigungsstift 9 und Schaltpunkt des elektrischen Schalter 8 begrenzt. Wird der Betätigungsstift 9 in die Schaltstange 5 eingedrückt und dabei der elektrische Schalter 8 betätigt, so wird der motorische Fokussierantrieb über seine zugehörige elektronische Steuerschaltung abgeschaltet.

Fällt beispielsweise diese Steuerelektronik für den Fokussierantrieb aus und/oder der Fokusmotor bewegt den Objekttisch 3 unkontrolliert, so wird durch die Anordnung des Kurzschlußschalters 21 an der Schaltfahne 4 eine Objekt/Objektivkollision ausgeschlossen. Durch den eingedrückten Betätigungsstift 9 in die Schaltstange 7 wird diese, nachdem der zulässige Überfahrweg X überschritten wurde, den Kurzschlußschalter 21 betätigen. Der Schalter 21 ist, wie bereits ausgeführt, direkt in den Stromkreis des Fokusmotors integriert. Diese Schaltfunktion der Schaltstange 7 ist in diesem Ausführungsbeispiel natürlich nur dann gegeben, wenn der elektrische Schalter 8 nach seinem Schaltpunkt, ausgelöst durch den Betätigungsstift 9, noch einen zusätzlichen Weg in seinem Gehäuse zurücklegen kann.

Die Funktion des Kurzschlußschalters 21 kann auch dadurch realisiert werden, daß der Fokusmotor mit einer Rutschkupplung ausgestattet ist und die Klemmkraft zwischen der Klemmhülse 14 und der Schaltstange 7 größer dimensioniert ist, als die Kraft des Fokusmotors. Durch den eingedrückten Betätigungsstift 9 in die Schaltstange 7 und Überschreitung des zulässigen Überfahrwegs X wird die Rutschkupplung aktiviert.

Eine derartige mechanische Begrenzung kann selbstverständlich auch dadurch erfolgen, daß die Feder 10 nur um einen bestimmten Betrag (Schaltweg X) zusammengedrückt werden kann und danach die Motorrutschkupplung aktiviert wird.

Eine weitere Möglichkeit einer mechanischen Begrenzung mit einer Rutschkupplung kann dadurch realisiert werden, daß der Fokusmotor die Klemmkraft zwischen der Schaltstange 7 und der Klemmhülse 14 aufheben kann und als mechanische Sperre die Feder 6 dient.

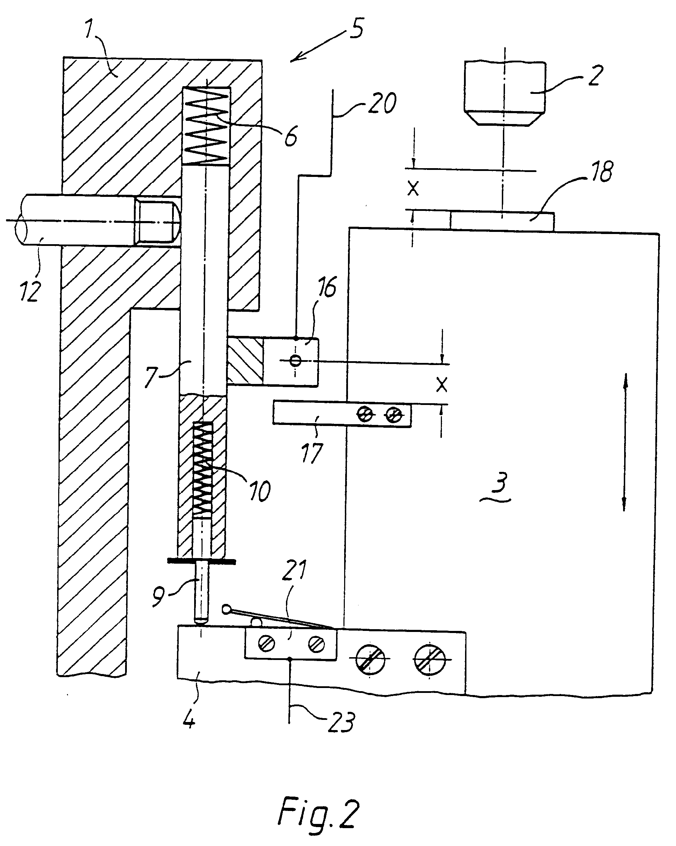

Die Figur 2 zeigt ein weiteres Ausführungsbeispiel der Erfindung mit einer Gabellichtschranke 16, die den elektrischen Schalter 8 aus der Fig. 1 ersetzt und der eine zweite am Objekttisch 3 angeordnete Schaltfahne 17 zugeordnet ist. Die Lichtschranke 16 ist über die Leitung 20 mit der Steuereinrichtung für den Fokusmotor verbunden. Der lichte Abstand X zwischen der Lichtschranke 16 und der Schaltfahne 17 definiert den Überfahrweg X des Objekttisches 3 aus der abgespeicherten Fokusposition zum Objektiv 2. An der Schaltfahne 4 ist der Kurzschlußschalter 21 angeordnet, der in den Stromkreis des Fokusmotors über die Kabelverbindungen 23 integriert ist. Der Betätigungsstift 9 ist fest mit der Feder 10 verbunden und in der Schaltstange 7 angeordnet.

Die Justage der Schaltstange 7 erfolgt analog zur Figur 1 nach einer ersten Fokussierung des Mikroskops.

Wird Schaltfahne 17 an der Gabellichtschranke 16 vorbeibewegt und dabei der Betätigungsstift 9 in die Schaltstange eingedrückt, so wird der motorische Fokussiertrieb über die Steuerelektronik abgeschaltet. Analog zum Ausführungsbeispiel der Figur 1 wird der Objekt/Objektivkollisionsschutz bei einem Ausfall der Steuerelektronik dadurch gewährleistet, daß die Schaltstange 7 den Kurzschlußschalter 21 nach dem Überschreiten des zulässigen Überfahrwegs X betätigt.

Die Funktion des Kurzschlußschalters 21 kann selbstverständlich durch die bereits beschriebenen mechanischen Varianten unter Verwendung einer Rutschkupplung für den Fokusmotor realisiert werden.

### Bezugszeichenliste

- 1: - Mikroskopstativ
- 2: - Mikroskopobjektiv
- 3: - Objekttisch
- 4: - erste Schaltfahne
- 5: - Endschaltvorrichtung
- 6: - Feder
- 7: - Schaltstange
- 8: - elektrischer Schalter
- 9: - Betätigungsstift
- 10: - Druckfeder
- 11: - Rändelknopf
- 12: - Klemmteil
- 13: - Kugel
- 14: - Klemmhülse
- 15: - Tellerfeder
- 16: - Gabellichtschranke
- 17: - zweite Schaltfahne
- 18: - Objekt
- 19: - Spannfeder
- 20: - Kabelverbindung
- 21: - elektrischer Kurzschlußschalter
- 22: - Ausnehmung
- 23: - Kabelverbindung

## Patentansprüche

1. Mikroskop mit einem Mikroskopstativ (1), einem Objekttisch (3), einem Fokussierantrieb zur Höhenverstellung des Objekttischs, Mitteln zur Speicherung und zur reproduzierbaren Einstellung einer definierten Position des Objekttisches und Mitteln zur Begrenzung der Verstellung des Objekttischs in Richtung des Objektivs (2),
dadurch gekennzeichnet, daß die Mittel zur Begrenzung der Verstellung des Objekttischs in Richtung des Objektivs aus einer am Stativ in einer wählbaren Höhe im wesentlichen parallel zur Richtung der Höhenverstellung befestigten Schaltstange (7), welche aus einem Gehäuse, einem darin verschiebbaren Betätigungsstift (9) und einem von diesem betätigbaren Schalter (8) zusammengesetzt ist, und aus einer am Objekttisch befestigten ersten Schaltfahne (4) zur Verschiebung des Betätigungsstifts in Richtung der Höhenverstellung bestehen, sowie aus einer Klemmvorrichtung (11-15, 19), mit der die Schaltstange in einer derartigen Höhe befestigt werden kann, daß, wenn der Objekttisch über die definierte Position hinaus näher zum Objektiv verstellt wird, der Betätigungsstift in Richtung des Schalters verschoben wird, und nach Überschreiten eines bestimmten Überfahrwegs (x) den Schalter betätigt, wodurch der Fokussierantrieb des Objekttisches abgeschaltet wird.

2. Mikroskop mit einem Mikroskopstativ (1), einem Objekttisch (3), einem Fokussierantrieb zur Höhenverstellung des Objekttischs, Mitteln zur Speicherung und zur reproduzierbaren Einstellung einer definierten Position des Objekttisches und Mitteln zur Begrenzung der Verstellung des Objekttischs in Richtung des Objektivs (2),
dadurch gekennzeichnet, daß die Mittel zur Begrenzung der Verstellung des Objekttischs in Richtung des Objektivs aus einer am Stativ in einer wählbaren Höhe im wesentlichen parallel zur Richtung der Höhenverstellung befestigten Schaltstange (7), welche aus einem Gehäuse, einem darin verschiebbaren Betätigungsstift (9) und einer am Gehäuse befestigten Gabellichtschranke (16) zusammengesetzt ist, und aus einer am Objekttisch befestigten zweiten Schaltfahne (17) zum Unterbrechen der Gabellichtschranke bestehen, sowie aus einer Klemmvorrichtung (11-15, 19), mit der die Schaltstange und die daran befindliche Gabellichtschranke in einer derartigen Höhe befestigt werden kann, daß, wenn der Objekttisch über die definierte Position hinaus näher zum Objektiv verstellt wird, nach Überschreiten eines bestimmten Überfahrwegs (x) die Gabellichtschranke anspricht, wodurch der Fokussierantrieb des Objekttisches abgeschaltet wird.

3. Endschaltvorrichtung nach Anspruch 1 oder Anspruch 2, dadurch gekennzeichnet, daß die Schaltstange (7) entlang der Bewegungsrichtung des Objekttisches (3) verstellbar am Mikroskopstativ (1) angeordnet ist.

4. Endschaltvorrichtung nach Anspruch 1, dadurch gekennzeichnet, daß der Betätigungsstift (9) zur kraftschlüssigen Verbindung mit dem Objekttisch (3) federnd gelagert ist.

5. Endschaltvorrichtung nach Anspruch 1 oder 2, dadurch gekennzeichnet, daß die erste Schaltfahne (4) einen Kurzschlußschalter (21) aufweist, welcher von der Schaltstange (7) betätigt wird.

6. Endschaltvorrichtung nach Anspruch 4, dadurch gekennzeichnet, daß der Kurzschlußschalter (21) nach dem elektrischen Schalter (8) seinen Schaltpunkt erreicht.

## Claims

1. Microscope with a microscope stand (1), an object table (3), a focussing drive for the adjustment of the height of the object table, means for the storage and for the reproducible setting of a defined position of the object table and means for limitation of the adjustment of the object table in the direction of the objective (2), characterised thereby, that the means for limitation of the adjustment of the object table in the direction of the objective (2) consist of a switch rod (7), which is fastened at the stand at a selectable height substantially parallelly to the direction of the adjustment of the height and which is composed of a housing, an actuating pin (9) displaceable therein and a switch (8) actuable thereby, and of a first switch lug (4), which is fastened at the object table, for the displacement of the actuating pin in the direction of the adjustment of the height as well as of a clamping device (11 to 15, 19), by which the switch rod can be fastened at such a height that, when the object table is displaced nearer to the objective beyond the defined position, the actuating pin is displaced in the direction of the switch and actuates it after a certain excess travel (x) has been exceeded, whereby the focussing drive of the object table is switched off.

2. Microscope with a microscope stand (1), an object table (3), a focussing drive for the adjustment of the height of the object table, means for the storage and for the reproducible setting of a defined position of the object table and means for limitation of the adjustment of the object table in the direction of the objective (2), characterised thereby, that the means for limitation of the adjustment of the object table in the direction of the objective (2) consist of a switch rod (7), which is fastened at the stand at a selectable height substantially parallelly to the direction of the adjustment of the height and which is composed of a housing, an actuating pin (9) displaceable therein and a forked light barrier (16), and of a second switch lug (17), which is fastened at the object table, for the interruption of the forked light barrier, as well as of a clamping device (11 to 15, 19), by which the switch rod and the forked light barrier can be fastened at such a height that, when the object table is displaced nearer to the objective beyond the defined position, the forked light barrier responds after a certain excess travel (x) has been exceeded, whereby the focussing drive of the object table is switched off.

3. Limit switch device according to claim 1 or 2, characterised thereby, that the switch rod (7) is arranged to be adjustable at the microscope stand (1) along the direction of movement of the object table (3).

4. Limit switch device according to claim 1, characterised thereby, that the actuating pin (9) is resiliently borne for the frictional connection with the object table (3).

5. Limit switch device according to claim 1 or 2, characterised thereby, that the first switch lug (4) displays a short-circuit switch (21), which is actuated by the switch rod (7).

6. Limit switch device according to claim 4, characterised thereby, that the short-circuit switch (21) reaches its switching point after the electrical switch (8).

## Revendications

1. Microscope avec un pied de microscope (1), une platine porte-objet (3), une commande de focalisation pour l'ajustage en hauteur de la platine porte-objet, des moyens pour le stockage et pour le réglage reproductibles d'une position définie de la platine porte-objet et des moyens pour délimiter le déplacement de la platine porte-objet en direction de l'objectif (2), caractérisé en ce que les moyens pour délimiter le déplacement de la platine porte-objet en direction de l'objectif sont constitués d'une tige de commutation (7) fixée au pied à une hauteur au choix sensiblement parallèlement à la direction de l'ajustage en hauteur, qui est constituée d'un boîtier, d'une goupille d'actionnement (9) déplaçable dans celui-ci et d'un commutateur (8) pouvant être actionné par celle-ci, et d'une première languette de commutation (4) fixée à la platine porte-objet pour le déplacement de la goupille d'actionnemeent en direction de l'ajustage en hauteur, ainsi que d'un dispositif de serrage (11-15, 19) au moyen duquel la tige de commutation peut être fixée à une hauteur telle que, lorsque la platine porte-objet est déplacée au-delà de la position définie plus près vers l'objet, la goupille d'actionnement est déplacée en direction du commutateur, et qu'il actionne après un dépassement d'un trajet de déplacement défini (X) le commutateur, par quoi la commande de focalisation de la platine porte-objet est mise hors service.

2. Microscope avec un pied de microscope (1), une platine porte-objet (3), une commande de focalisation pour l'ajustage en hauteur de la platine porte-objet, des moyens pour le stockage et pour le réglage reproductibles d'une position définie de la platine porte-objet et des moyens pour délimiter le déplacement de la platine porte-objet en direction de l'objectif (2), caractérisé en ce que les moyens pour délimiter le déplacement de la platine porte-objet en direction de l'objectif sont constitués d'une tige de commutation (7) fixée au pied à une hauteur au choix sensiblement parallèlement à la direction de l'ajustage en hauteur, qui est constituée d'un boîtier, d'une goupille d'actionnement (9) déplaçable dans celui-ci et d'un barrage photoélectrique à fourche (16) fixé au boîtier, et d'une deuxième languette de commutation (17) fixée à la platine porte-objet pour interrompre le barrage photoélectrique à fourche, ainsi que d'un dispositif de serrage (11-15, 19) avec lequel la tige de commutation et le barrage photoélectrique à fourche se trouvant à celle-ci peuvent être fixés dans une hauteur telle que lorsque la platine porte-objet est déplacée au-delà de la position définie plus près vers l'objectif, après un dépassement d'un trajet de déplacement défini (X), le barrage photoélectrique à fourche réagit par quoi la commande de focalisation de la platine porte-objet est mise hors service.

3. interrupteur de fin de course selon la revendication 1 ou la revendication 2, caractérisé en ce que la tige de commutation (7) est disposée dans la direction de déplacement de la platine porte-objet (3) de façon ajustable au pied de microscope (1).

4. Interrupteur de fin de course selon la revendication 1, caractérisé en ce que la goupille d'actionnement (9) est montée à ressort en vue d'une liaison par force avec la platine porte-objet (3).

5. Interrupteur de fin de course selon la revendication 1 ou 2, caractérisé en ce que la première languette de commutation (4) présente un commutateur de court-circuit (21) qui est actionné par la tige de commutation (7).

6. Interrupteur de fin de course selon la revendication 4, caractérisé en ce que le commutateur de court-circuit (21) atteint son point de commutation après le commutateur électrique (8).
